# FASCICULE DE BREVET EUROPEEN

(11) **EP 3 233 939 B1**
(45) Date de publication et mention de la délivrance du brevet: **25.03.2020**
(21) Numéro de dépôt: 15822983.1
(22) Date de dépôt: 17.12.2015
(51) Int. Cl.: C08F 20/06, C08F 2/01

(54) **PROCÉDÉ DE PRÉPARATION EN CONTINU DE POLYMÈRES ANIONIQUES PAR VOIE RADICALAIRE**
VERFAHREN ZUR KONTINUIERLICHEN HERSTELLUNG VON ANIONISCHEN POLYMEREN UNTER VERWENDUNG VON RADIKALEN
METHOD FOR THE CONTINUOUS PRODUCTION OF ANIONIC POLYMERS USING RADICALS

(30) Priorité: 19.12.2014 FR 1462899
(43) Date de publication de la demande: 25.10.2017
(73) Titulaire: COATEX, 69730 Genay (FR)
(72) Inventeur: SUAU, Jean-Marc, 69480 Lucenay (FR); MATTER, Yves, 69650 Quincieux (FR); PEYCELON, Dominique, 01330 Bouligneux (FR)
(74) Mandataire: Balmefrezol, Ludovic Francis Pierre
(86) Numéro de dépôt international: PCT/FR2015/053561
(87) Numéro de publication internationale: WO 2016/097614

(56) Documents cités:
- WO-A1-99/55457
- US-A1- 2014 088 280
- NENAD MICIC ET AL: "Scale-up of the reversible addition-fragmentation chain transfer (RAFT) polymerization using continuous flow processing", PROCESSES,, vol. 2, 8 janvier 2014 (2014-01-08), pages 58-70, XP002744189, ISSN: 2227-9717, DOI: 10.3390/PR2010058

## Description

L'invention a pour objet un procédé de préparation en continu de polymères anioniques par voie radicalaire, ainsi que les polymères obtenus par ce procédé.

### Arrière-plan technologique :

La polymérisation en continu de polymères anioniques par voie radicalaire a déjà été décrite dans la demande US 2014/0088280.

Dans cette demande, les inventeurs ont cherché à mettre au point un procédé permettant la préparation de polymères anioniques en solution avec une répartition molaire définie, très étroite de masse, économe en énergie, c'est à dire sans préchauffage, avec un risque de colmatage dans le micromélangeur et ou le réacteur réduit et / ou dans la mesure du possible permettant d'éviter les problèmes de corrosion dans le cas de l'utilisation de monomères contenant des groupes acides.

Les inventeurs ont ainsi proposé l'utilisation de micro-réacteurs ayant un diamètre interne inférieur à 30 mm. Leur procédé nécessite plusieurs mélanges en amont du microréacteur et un microréacteur par zone de polymérisation.

Cependant, on est toujours à la recherche de procédés permettant de polymériser en continu des monomères anioniques polymérisables par voie radicalaire, dont la réaction de polymérisation est particulièrement exothermique et rapide, ce qui génère de nombreux problèmes techniques et de sécurité. On citera en particulier l'acide acrylique, qui est un monomère extrêmement réactif. C'est notamment pour cela que d'un point de vue industriel, aujourd'hui, on préfère encore utiliser des procédés semi-batch engendrant cependant des temps de cycle relativement longs.

En outre, à la connaissance des inventeurs, dans les réacteurs continus proposés à ce jour, on rencontre des problèmes de formation de bouchons bloquant les réacteurs, dus à la formation de gels lors de la polymérisation. En outre, les taux de transformation sont souvent faibles et peuvent nécessiter des traitements complémentaires. Le document WO 99/55457 décrit un procédé polymérisation en continu, utilisant un réacteur tubulaire soumis à un mouvement oscillatoire spécifique.

### Description de l'invention :

L'invention propose donc un nouveau procédé de préparation en continu de polymères anioniques par polymérisation radicalaire. Les polymères préparés par ce procédé ont un poids moléculaire contrôlé et un faible indice de polydispersité.

L'invention a pour objet un procédé de préparation en continu d'un polymère anionique, de poids moléculaire Mw inférieur à 10 000 g/mol, d'extrait sec (ES) compris entre 20 % et 60 % en poids, par rapport au poids total de la formule, par polymérisation radicalaire, comprenant les étapes suivantes :
a) on dispose d'au moins un monomère choisi parmi l'acide acrylique, l'acide méthacrylique et leurs mélanges, ledit monomère pouvant être partiellement neutralisé,
b) on dispose d'eau, éventuellement chaude,
c) on dispose d'au moins un initiateur,
d) on dispose éventuellement d'au moins un agent de transfert de chaîne,
e) on introduit les composants des étapes a), b), c) et d) dans un réacteur tubulaire d'une longueur L_{R} d'au moins 5 m et comprenant au moins une section tubulaire de longueur L_{S} et de diamètre interne D tel que L_{S} est au moins 20 fois plus grande que D, dans lequel chaque section tubulaire comprend sur toute sa longueur une pluralité de chicanes stationnaires, opposées au flux, sous la forme de rondelles d'un diamètre identique au diamètre interne de la section tubulaire, formant ainsi un fluide dans le réacteur tubulaire,
f) on connecte la section tubulaire à un dispositif permettant de soumettre ledit fluide à un mouvement oscillatoire,
g) on conduit une réaction de polymérisation dans ledit réacteur, éventuellement avec un moyen de chauffage permettant d'amorcer la réaction de polymérisation, avec un temps de séjour dans le réacteur supérieur à 1 min, le temps de séjour, la taille des trous dans les chicanes, leur espacement, les mouvements du dispositif sont choisis de sorte à assurer en tout point dans le réacteur une bonne homogénéité du mélange,
h) On obtient en sortie du réacteur ledit polymère anionique en solution dans l'eau.

Les polymères sont généralement caractérisés par deux indices/grandeurs/valeurs :
- l'indice de polydispersité PDI (également appelé de manière équivalente polymolécularité IP) et
- le poids moléculaire Mw (également appelé de manière équivalente masse molaire ou masse moléculaire), exprimée en g/mol.

L'indice de polydispersibilité PDI du polymère est calculé de la manière suivante : il s'agit du rapport du poids moléculaire moyen en masse Mw sur le poids moléculaire moyen en nombre Mn.

L'indice de polydispersité traduit la distribution des masses molaires des différentes macromolécules au sein de la solution de polymère. Si toutes les macromolécules présentent un même degré de polymérisation (donc un même poids moléculaire), cet indice est proche de 1. Si par contre, les macromolécules présentent des degrés de polymérisation différents (donc des poids moléculaires différents), l'indice PDI est supérieur à 1.

Le poids moléculaire Mw et l'indice PDI sont déterminés par chromatographie en phase gazeuse (GPC) selon la méthode décrite avant les exemples.

Le poids moléculaire Mw du polymère anionique obtenu par le procédé selon l'invention est avantageusement compris entre 1 500 et 10 000 g/mol, plus avantageusement entre 3 500 et 7 000 g/mol.

L'indice de polydispersité du polymère anionique obtenu par le procédé selon l'invention est avantageusement inférieur à 4, plus avantageusement inférieur à 3,5, encore plus avantageusement inférieur à 3, encore plus avantageusement inférieur à 2,5. L'indice de polydispersité du polymère anionique obtenu par le procédé selon l'invention est avantageusement compris entre 1,5 et 4, plus avantageusement compris entre 1,5 et 3,5, encore plus avantageusement compris entre 1,5 et 3, encore plus avantageusement compris entre 1,5 et 2,5.

L'extrait sec (ES) du polymère anionique obtenu par le procédé selon l'invention est avantageusement compris entre 30 % et 60 % en poids ou entre 40 % et 60 % en poids, par rapport au poids total de la formule.

### Monomères :

Le monomère est choisi parmi l'acide acrylique, l'acide méthacrylique et leurs mélanges. Ainsi, le polymère anionique obtenu pourra être un homopolymère ou un copolymère.

Par « homopolymère ou copolymère de l'acide (méth)acrylique », on entend soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique). Dans ce dernier cas, selon un aspect de l'invention, le ratio molaire entre monomères d'acide acrylique et monomères d'acide méthacrylique peut varier entre 1:100 et 100:1, par exemple entre 1:1 et 100:1 ou entre 1:1 et 50:1.

Ledit monomère peut être partiellement neutralisé. Ainsi, dans une variante de réalisation, 2 % à 50 % en poids du monomère acide (méth)acrylique, par rapport au poids total du monomère acide (méth)acrylique introduit, est neutralisé.

Il peut l'être au moyen d'un seul agent de neutralisation ou de plusieurs agents de neutralisation. Le monomère peut être par exemple partiellement neutralisé au moyen d'un hydroxyde alcalin ou alcalino-terreux, d'un oxyde alcalino-terreux, et/ou avec une amine. On peut citer, à titre d'exemple, l'hydroxyde de sodium, de potassium, de lithium, de calcium, de magnésium, l'oxyde de calcium, l'oxyde de potassium.

Par ailleurs, le copolymère selon l'invention peut également comprendre, en outre, un ou plusieurs autre(s) monomère(s) éthyléniquement insaturé(s) choisi(s) dans le groupe consistant en l'acide 2-acrylamido-2-méthylpropane sulfonique (AMPS), l'acide maléique, l'acide fumarique, l'acide crotonique, l'acide itaconique, les télomères insaturés de l'acide acrylique, les monomères de formule (I) : 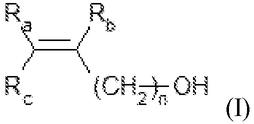 dans laquelle:
- Rₐ, R_{b} et R_{c} représentent, indépendamment les uns des autres, H ou CH₃,
- n est un entier variant entre 0 et 2 (c'est-à-dire 0, 1 ou 2).

En particulier, le monomère peut être alcool allylique (n=1), l'alcool méthallylique (n=1), l'isoprénol (n=2). Avantageusement, on utilise l'isoprénol.

Par « télomères insaturés de l'acide acrylique », on entend des oligomères d'acide acrylique ou acide acryloxypropionique, de formule (II) : 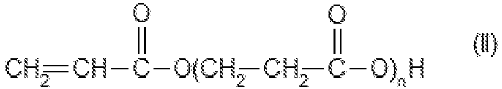 où n est un entier variant de 1 à 10. Ces différents oligomères peuvent être en mélange. Lorsque n = 1, l'oligomère est un dimère d'acide acrylique.

En présence d'autre(s) monomère(s) insaturé(s), selon un aspect de l'invention, le ratio molaire entre monomères d'acide (méth)acrylique et autre(s) monomère(s) insaturé(s) peut varier entre 1:1 et 100:1, par exemple entre 1:1 et 75:1 ou entre 1:1 et 50:1.

Le monomère est avantageusement l'acide acrylique.

On introduit dans le réacteur, avec ces monomères, au moins un initiateur et, éventuellement au moins un agent de transfert de chaîne. On peut également introduire au moins un catalyseur à base de sels métalliques hydrosolubles.

Par « initiateur », on entend, selon la présente invention, un système d'amorçage comprenant un oxydant et éventuellement un réducteur.

En particulier, on utilise les systèmes suivants :
- peroxyde d'hydrogène (H₂O₂), catalyseur à base de sels métalliques hydrosolubles, dipropyl dipropionique acide trithiocarbonate (DPTTC, CAS No. 6332-91-8) ou ses sels, par exemple son sel disodique (trithiocarbonate de dipropionate de sodium ou sel disodique d'acide 2,2'-[carbonothioylbis (thio)]bis- propanoique, CAS No. 86470-33-2), tel que représenté par la formule (III) ci-dessous : 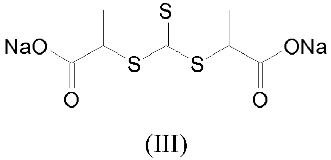
- H₂O₂, catalyseur à base de sels métalliques hydrosolubles,
- H₂O₂, catalyseur à base de sels métalliques hydrosolubles, hypophosphite de sodium,
- H₂O₂, hypophosphite de sodium,
- H₂O₂, catalyseur à base de sels métalliques hydrosolubles, bétabisulfite de sodium ou métabisulfite de sodium,
- Persulfate, catalyseur à base de sels métalliques hydrosolubles,
- Persulfate, bétabisulfite de sodium ou métabisulfite de sodium,
- Persulfate, hypophosphite de sodium, avec ou sans catalyseur à base de sels métalliques hydrosolubles,
- Persulfate, H₂O₂, hypophosphite de sodium, avec ou sans catalyseur à base de sels métalliques hydrosolubles,
- H₂O₂, dipropyl trithiocarbonate, hypophosphite de sodium, avec ou sans catalyseur à base de sels métalliques hydrosolubles.

Le persulfate est avantageusement un persulfate de sodium.

Le catalyseur à base de sels métalliques hydrosolubles est avantageusement choisi dans le groupe consistant en les carbonates de cuivre, le sulfate de cuivre, le sulfate de fer et un mélange de ces composés.

Lorsque le système comprend du peroxyde d'hydrogène et un catalyseur à base de sels métalliques hydrosolubles, on peut également y ajouter du sulfate hydroxylamine, qui permet notamment d'abaisser la température d'initiation et de diminuer le temps d'induction.

Des mercaptans, à titre de seul agent de transfert ou avec les agents de transfert susmentionnés, peuvent être mis en œuvre pour limiter les poids moléculaires.

La polymérisation est conduite substantiellement dans l'eau.

### Procédé :

On introduit chacun des composants des étapes a), b), c), d), dans le réacteur. Avantageusement, on dispose également d'au moins un catalyseur à base de sels métalliques hydrosolubles. L'eau peut être chaude.
On entend par « chaude » que l'eau est à une température supérieure à 20°C, jusqu'à sa température d'ébullition. Dans une variante, l'eau est chauffée à une température supérieure à 60°C, par exemple supérieure à 80°C.

Le procédé selon l'invention permet d'envisager un grand nombre de possibilités dans l'introduction des composants, en fonction de la nature des composants et des propriétés applicatives finales des polymères recherchées. Ainsi, chacun des composants, peut être introduit au même point dans le réacteur ou en des points différents. En outre, pour chacun des composants, l'introduction peut être totale ou séquencée en différents endroits du réacteur, avec un débit constant ou variable.

Selon un mode de réalisation, l'initiateur est introduit en entrée et/ou en aval du réacteur, en une ou plusieurs fois. Lorsque l'initiateur comprend un oxydant et un réducteur, leur administration peut être séparée.

Selon un autre mode de réalisation, l'agent de transfert est introduit en entrée et/ou en aval du réacteur, en une ou plusieurs fois.

Selon un autre mode de réalisation encore, le monomère est introduit en entrée et/ou en aval du réacteur, en une ou plusieurs fois.

Selon un mode de réalisation, le catalyseur à base de sels métalliques hydrosolubles est introduit en entrée et/ou en aval du réacteur, en une ou plusieurs fois.

Chacun de ces composés peut être introduit seul, ou en mélange avec l'un quelconque ou tous les autres composés, en des proportions adaptées.

Par le terme « aval », on entend, au sens de la présente invention un point d'introduction qui est plus proche de la sortie du réacteur que ne l'est le point d'entrée du réacteur. Lorsque le monomère est mélangé à l'eau avant introduction dans le réacteur, le mélange est homogénéisé, avantageusement dans un mélangeur statique (par exemple de type Sulzer SMX®). Dans ce mélange homogène, on peut également ajouter :
- au moins un initiateur,
- éventuellement au moins un agent de transfert,
- éventuellement au moins un catalyseur à base de sels métalliques hydrosolubles.

Le procédé selon l'invention se caractérise en ce que l'on emploie un dispositif permettant de soumettre le fluide à un mouvement oscillatoire.

L'amplitude du mouvement oscillatoire varie avantageusement de 0,3×d2 à 4×d2, plus avantageusement de 0,7×d2 à 3×d2, encore plus avantageusement de 1×d2 à 2×d2. d2 est le diamètre externe des chicanes, tel que défini après.

La fréquence du mouvement oscillatoire varie avantageusement de 0,1 à 100 Hz, plus avantageusement de 0,1 à 10 Hz, par exemple de 0,1 à 5 Hz, de 0,5 à 5 Hz ou de 3 à 10 Hz.

Selon un mode de réalisation, l'amplitude du mouvement oscillatoire varie de 0,3xd2 à 4xd2, et la fréquence du mouvement oscillatoire varie de 0,1 à 100 Hz.

Dans le procédé selon l'invention, le réacteur est rempli de liquide. Certaines réactions peuvent engendrer des gaz mais idéalement on reste dans des conditions telles que le taux de remplissage en liquide du réacteur, à savoir le volume occupé par le liquide dans le réacteur par rapport au volume total du réacteur, soit supérieur à 90 %.

En démarrage, le réacteur est avantageusement préalablement rempli d'eau, qui peut être chaude.

Le dispositif est tout moyen permettant d'imposer au fluide un mouvement directionnel oscillatoire. Ce dispositif peut par exemple être un piston hydraulique, une ou des membranes, un piston mécanique.
Ce dispositif peut être externe au réacteur tubulaire.
L'ensemble réacteur/dispositif forme un COBR pour « Continuous Baffled Reactor » (réacteur oscillant continu).

On entend par « tubulaire » un réacteur dont la longueur est très supérieure à la section.

Dans un mode de réalisation de la présente invention, cette section est circulaire. On parlera dans ce cas-là de réacteur tubulaire cylindrique.

Dans la présente invention, on décrit en détail le mode de réalisation dans lequel la section est circulaire. Cette description sera adaptée par l'homme du métier lorsque la section n'est pas circulaire.

Le réacteur tubulaire comprend au moins une section tubulaire de longueur L_{S} et de diamètre interne D avec L_{S} est au moins 20 fois plus grande que le diamètre interne D. L_{S} peut être identique à L_{R}.

Pour gagner de la place au sol, le réacteur tubulaire peut comprendre au moins deux sections tubulaires, chaque section tubulaire a un diamètre interne identique, montées substantiellement en parallèle et reliées par un coude. Le coude a avantageusement la forme d'un U. Le coude comprend lui aussi des chicanes avantageusement.

Avantageusement, chaque section tubulaire a un diamètre interne constant, qui est identique d'une section à l'autre. D est avantageusement inférieur à 20 cm, plus avantageusement inférieur à 15 cm, encore plus avantageusement inférieur ou égal à 10 cm. D est avantageusement supérieur à 3 cm.

Dans les zones où la polymérisation peut avoir lieu, chaque section tubulaire du réacteur comprend sur toute sa longueur une pluralité de chicanes stationnaires, opposées au flux.

Par « opposées au flux », on entend, selon la présente invention, que l'angle des chicanes, par rapport au flux, varie de 80° à 100°. Il est par exemple perpendiculaire ou substantiellement perpendiculaire.

Les chicanes sont sous la forme de rondelles d'un diamètre identique au diamètre interne D de la section tubulaire. Les chicanes peuvent être disposées sur un rail facilitant ainsi leur mise en place. Ce rail peut être aisément retiré puis réintroduit dans la section tubulaire, facilitant ainsi le nettoyage et la maintenance du réacteur.

On entend par « rondelles » des disques portant des trous annulaires concentriques qui ont l'aspect de rondelles. Le diamètre le plus grand de cette rondelle est appelé diamètre externe d2.

On entend par « d'un diamètre identique au diamètre interne de la section tubulaire » que le diamètre externe d2 est sensiblement égal au diamètre D pour forcer toute la matière à franchir la chicane en passant par son ouverture centrale, tout en étant légèrement inférieur pour permettre une manipulation (insert/retrait) du rail sans frottement, en particulier lors des phases de nettoyage/maintenance du réacteur.

Les chicanes sont espacées, de manière régulière ou non, d'une distance allant avantageusement de 1D à 3D, mais permettant le maintien de l'homogénéité. Dans une variante, l'espacement entre les chicanes est régulier. Dans une autre variante, l'espacement entre les chicanes est irrégulier. Avantageusement, les chicanes sont espacées d'une distance allant de 1D à 2,5D, par exemple 2D.

L'espacement des chicanes peut être adapté en fonction de l'avancée de la réaction de polymérisation, et ainsi être différent dans les zones où la polymérisation commence, dans les zones où la polymérisation est en cours, dans les zones où la polymérisation se termine.

La présence de chicanes est nécessaire au cours du processus de polymérisation. Ainsi, avantageusement, tant que le taux de conversion du monomère est inférieur à 90 %, le réacteur tubulaire comprend des chicanes.

Avantageusement, les chicanes comprennent des trous annulaires concentriques tels que le ratio d2/d1, où d2 est le diamètre externe de la rondelle et d1 le diamètre interne de la rondelle, varie de 1,2 à 5, plus avantageusement de 1,5 à 2,5.

Le temps de séjour dans le réacteur est avantageusement compris entre 1 min et 20 min, plus avantageusement compris entre 1 min et 10 min.

Le débit dans chaque section tubulaire peut être élevé à très élevé. Il est avantageusement supérieur à 20 kg/h, plus avantageusement supérieur à 100 kg/h et peut aller jusqu'à 1 ou plusieurs tonne(s)/h, en fonction du diamètre.

En différents points du réacteur, il est possible d'introduire des réactifs. Il est également possible d'insérer des appareils de mesure et/ou de contrôle, des sondes ou capteurs, permettant notamment de mesurer en ligne ou en continu la température, la pression, le taux de conversion, la viscosité. On citera par exemple les mesures infrarouge, proche ou moyen IR et les mesures RAMAN.

Le moyen de chauffage peut être l'introduction d'eau chaude directement dans le réacteur tubulaire et/ou le réacteur peut comprendre un ou plusieurs dispositifs permettant d'apporter des calories, telle qu'une double enveloppe.

Dans un mode de réalisation, le réacteur comprend au moins un dispositif permettant d'apporter ou d'évacuer des calories, telles que des sections de double enveloppe, permettant un contrôle de la température qui peut être différente d'une zone à l'autre. En fonction des besoins, les moyens peuvent réchauffer ou refroidir certaines sections du réacteur tubulaire.

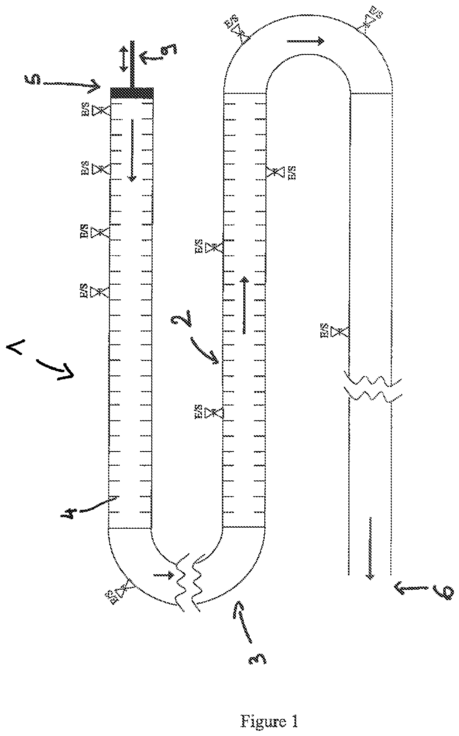

Un exemple de réacteur est représenté sur la figure 1.
Sur cette figure, un réacteur tubulaire à chicanes est généralement représenté en 1 et comprend des sections tubulaires 2 reliées par des coudes en U 3. S'étendant radialement vers l'intérieur depuis le côté du récipient, un certain nombre de chicanes annulaires 4. Les chicanes annulaires sont jointes ensemble par des rails (non représentés sur la figure 1) d'une manière sensiblement équidistantes, et sont disposées sensiblement en parallèle. Les chicanes annulaires sont présentes dans chaque section tubulaire, y compris dans les coudes en U (même si elles ne sont pas représentées sur la figure 1).

Le réacteur comprend une entrée 5 et une sortie 6.

Le réacteur 1 comprend également des zones d'introduction en réactifs et des zones de mesures, représentées par le symbole E/S sur la figure. E/S signifie entrée/sortie, et ainsi montre qu'il est possible d'introduire des réactifs ou des appareils de mesure dans le réacteur mais qu'il est également possible de prélever par exemple des échantillons.

En entrée, le réacteur est connecté à un dispositif externe 9 permettant de soumettre le fluide à un mouvement oscillatoire.

Sur cette figure, on a également représenté des sections tubulaires ne comprenant pas de chicanes, en des zones où la polymérisation est terminée (consommation du monomère et/ou des radicaux) et où le polymère formé peut par exemple être neutralisé.

On n'a pas ici représenté de double enveloppe, ou de segment de double enveloppe, qui permettrait de contrôler et de maintenir une température constante ou un gradient uniforme de profil de température dans le réacteur 1 à l'aide d'un refroidisseur/réchauffeur.

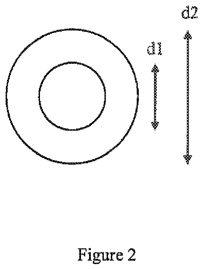

Sur la figure 2, on a représenté les diamètres internes d1 et externes d2 de la chicane.

Le procédé selon l'invention permet de contrôler efficacement le poids moléculaire du polymère formé. Il permet également d'obtenir des polymères ayant un faible indice de polydispersité.

Par le procédé, le taux de conversion du monomère est élevé. Il varie avantageusement de 80 % à 100 %, par exemple de 90 % à 100 %.

Les polymères obtenus par le procédé selon l'invention ou en utilisant un appareil selon l'invention peuvent être utilisés comme agent anti-tartre dans le traitement des eaux ou comme additif dans les formulations détergentes.

Dans une variante avantageuse de l'invention, on injecte également dans le réacteur, en une zone où la conversion du monomère est supérieure à 90 %, un agent de neutralisation, tel qu'un hydroxyde d'un métal alcalin ou alcalino-terreux. Une telle injection va permettre de conduire dans ce même réacteur une réaction de neutralisation du polymère formé.

Le polymère peut être totalement ou partiellement neutralisé, au moyen d'un ou plusieurs agents de neutralisation, par exemple monovalent (ou monofonctionnel) ou plurivalent (plurifonctionnel ou divalent).

Si le polymère est partiellement neutralisé, il peut l'être au moyen d'un seul agent de neutralisation ou de plusieurs agents de neutralisation.

Par exemple, il est possible d'envisager les modes de neutralisation suivants, seul ou en combinaison :
- un pourcentage molaire de neutralisation des sites acides actifs du polymère par un agent de neutralisation contenant l'ion calcium compris entre 2 % et 60 %, par exemple compris entre 25 % et 55 % ou entre 2 % et 15 %,
- un pourcentage molaire de neutralisation des sites acides actifs du polymère par un ou plusieurs agents de neutralisation monofonctionnels contenant l'ion sodium et/ou l'ion lithium et/ou l'ion potassium compris entre 7 % et 97 %, par exemple compris entre 20 % et 60 % ou entre 60 % et 97 %,
- un pourcentage molaire de neutralisation des sites acides actifs du polymère par un agent de neutralisation contenant l'ion magnésium, baryum, zinc, aluminium ou une amine ou leurs mélanges et en particulier par un agent de neutralisation contenant l'ion magnésium compris entre 0 % et 60 %, par exemple compris entre 10 % et 55 %.

A partir de la zone d'introduction de ces agents de neutralisation, les sections tubulaires peuvent, ou non, comprendre les chicanes.

En sortie, le réacteur peut être relié à un réacteur tubulaire équipé ou non d'un dispositif oscillatoire tel que défini précédemment, à un réacteur agité et/ou une colonne de distillation flash. Le tubulaire peut permettre de conduire une réaction de neutralisation du polymère formé. La colonne de distillation flash permet d'augmenter l'extrait sec du polymère par l'utilisation des calories issues de la polymérisation et élimination de l'eau par détente.

Le procédé selon l'invention est particulièrement adapté à la synthèse de poly(acide acrylique). Par le procédé selon l'invention, on peut obtenir un poly(acide acrylique) de poids moléculaire Mw compris entre 1 000 et 10 000 g/mol et d'indice de polydispersité PDI compris entre 1,5 et 4. Il est ensuite possible de le neutraliser aisément en continu, soit dans le réacteur tubulaire lui-même, soit dans un tubulaire relié au réacteur, tel que décrit précédemment.

Le poids moléculaire Mw du poly(acide acrylique) obtenu par le procédé selon l'invention est par exemple compris entre 1 500 et 10 000 g/mol, ou par exemple entre 3 500 et 7 000 g/mol.

L'indice de polydispersité PDI est avantageusement compris entre 2 et 3, plus avantageusement compris entre 2 et 2,6.

L'invention a donc également pour objet un procédé selon l'invention, dans lequel le monomère est l'acide acrylique et le polymère obtenu est le poly(acide acrylique) de poids moléculaire Mw compris entre 1 000 et 10 000 g/mol et d'indice de polydispersité compris entre 1,5 et 4.

L'invention a aussi pour objet les polymères anioniques obtenus par le procédé selon l'invention.

### Descriptif des méthodes de caractérisation des polymères obtenus :

### Poids moléculaire Mw du polymère :

Une telle technique met en œuvre un appareil de chromatographie liquide de marque WATERS™ doté d'un détecteur. Ce détecteur est un détecteur de concentration réfractométrique de marque WATERS™.
Cet appareillage de chromatographie liquide est doté d'une colonne d'exclusion stérique convenablement choisie par l'homme du métier afin de séparer les différents poids moléculaires des polymères étudiés. La phase liquide d'élution est une phase aqueuse ajustée à pH 9 par de la soude 1N contenant 0,05M de NaHCO₃, 0,1M de NaNO₃, 0,02M de triétanolamine et 0,03 % de NaN₃.

De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05M de NaHCO₃, 0,1M de NaNO₃, 0,02M de triétanolamine et 0,03 % de NaN₃).

L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivantes : une précolonne de type GUARD COLUMN ULTRAHYDROGEL WATERS™ de 6 cm de long et 40 mm de diamètre intérieur, et une colonne linéaire de type ULTRAHYDROGEL WATERS™ de 30 cm de long et 7,8 mm de diamètre intérieur. Le système de détection quant à lui se compose d'un détecteur réfractométrique de type RI WATERS™ 410. Le four est porté à la température de 60°C, et le réfractomètre est porté à la température de 45°C.

L'appareil de chromatographie est étalonné par des étalons de polyacrylate de sodium en poudre de différentes masses moléculaires certifiées par le fournisseur : POLYMER STANDARD SERVICE ou AMERICAN POLYMER STANDARDS CORPORATION.

### Quantité de monomères résiduels :

La quantité de monomères résiduels est mesurée selon des techniques classiques, connues de l'homme du métier, par exemple par Chromatographie Liquide à Haute Pression (CLHP) ou en anglais « High Performance Liquid Chromatography » (HPLC). Dans cette méthode, les composants constitutifs du mélange sont séparés sur une phase stationnaire, et détectés par un détecteur UV. Après étalonnage du détecteur, on peut par exemple à partir de l'aire du pic correspondant au composé acrylique obtenir la quantité d'acide (méth)acrylique résiduel.

Cette méthode est notamment décrite dans le manuel « Chimie Organique Expérimentale », par M. Chavanne, A. Julien, G. J. Beaudoin, E. Flamand, deuxième Edition, Editions Modulo, chapitre 18, pages 271-325.

### Extrait sec :

La concentration en polymère est mesurée par dessiccation, par des méthodes connues de l'homme du métier.

### Temps de séjour :

Il peut être mesuré à l'aide d'un traceur tel qu'une solution saline. Pour ce faire, pour un débit imposé, on injecte à t=0 une solution saline et on mesure en sortie de réacteur la conductivité et la variation de conductivité en fonction du temps.

Les exemples suivant illustrent l'invention.

### Exemple 1 :

Cet exemple illustre la polymérisation en continu de l'acide acrylique dans un réacteur tubulaire de longueur L=20 m et de diamètre interne D=15 mm équipé d'un système pouvant osciller à une fréquence de 0 à 10Hz avec une amplitude comprise entre 0 et 5 cm. Les oscillations sont transmises mécaniquement au fluide présent à l'intérieur dudit réacteur à l'aide d'un piston coulissant étanche. On utilise ici un réacteur Ni-Tech®.

L'acide acrylique est polymérisé en présence d'un système d'amorçage composé de peroxyde d'hydrogène, couplé à des sels métalliques ainsi qu'au sulfate d'hydroxylamine. Un agent de transfert est utilisé afin de limiter les masses moléculaires du poly(acide acrylique) fabriqué. Il s'agit du sel de DPTTC. L'extrait sec final en poly(acide acrylique) est d'environ 35 %.

Les réactifs sont séparés dans trois cuves préparantes distinctes et sont mélangés juste avant leur introduction dans le réacteur tubulaire afin de s'assurer que la polymérisation ne débute qu'à l'intérieur dudit réacteur. Les réactifs issus des trois cuves sont mélangés à l'aide d'un mélangeur statique (de type SMX®) à l'aide de trois pompes distinctes.

Les débits d'introduction des réactifs dans le mélangeur statique et donc dans le réacteur situé en aval sont réglés de telle sorte que les masses introduites soient proportionnelles aux valeurs mentionnées dans le tableau ci-après :

**Tableau 1**

| **Cuve 1** | | **Cuve 2, thermostatée à 80°C** | | | **Cuve 3** | |
|---|---|---|---|---|---|---|
| AA 100 % (Kg) | Sel DPTTC 100 % (Kg) | Sulfate Fe (Kg) | Sulfate d'hydroxylamine (Kg) | Eau déminéralisée (Kg) | Peroxyde d'hydrogène 35 % (Kg) | Eau déminéralisée (Kg) |
| 35 | 1,5 | 0,1 | 0,025 | 55 | 4,5 | 4 |

| | | | | | | |
|---|---|---|---|---|---|---|
| AA = acide acrylique | | | | | | |

Les débits des trois pompes reliées aux trois cuves préparantes sont ensuite proportionnellement modifiés afin d'ajuster le temps de séjour dans le réacteur tubulaire. Ledit temps de séjour est mesuré visuellement par ajout d'un traceur coloré ou à l'aide d'un conductimètre et d'une solution saline.

Le polymère fabriqué par ce biais peut être collecté afin d'en évaluer les caractéristiques physico-chimiques. Le produit prélevé est une solution polymérique aqueuse peu visqueuse.

Outre le débit global (résultant de la somme des débits des trois pompes), la fréquence ainsi que l'amplitude imprimées par l'oscillateur peuvent être modifiées. Dès que l'un de ces paramètres est modifié, il est nécessaire d'attendre un temps au moins égal à cinq fois le temps de séjour dans le réacteur avant de collecter un échantillon en sortie du réacteur ou sur un point de collecte intermédiaire (et ce afin d'atteindre le régime stationnaire caractéristique d'un procédé continu).

Pour la recette du tableau 1, un temps de séjour dans le réacteur d'environ quatre minutes permet d'obtenir un degré de conversion acceptable. Le débit des trois pompes est alors fixé afin que le débit global soit proche de 40 Kg par heure.

Dans ces conditions opératoires, l'amplitude et la fréquence des oscillations sont modifiées. Dans tous les cas de figures, une exothermie ainsi qu'une élévation de pression sont observées au sein du réacteur. La température maximale observée était de 150°C et la pression maximale était de 10 bars.

### Caractérisation des polymères obtenus :

**Tableau 2**

| Fréquence (Hz) | Amplitude (mm) | Conversion (%) | Mn (g/mol) | Mw (g/mol) | IP |
|---|---|---|---|---|---|
| 1,25 | 25 | 94,9 | 1 925 | 5 570 | 2,9 |
| 1,25 | 50 | 98 | 2150 | 5 980 | 2,8 |
| 2,5 | 12,5 | 95,2 | 1 870 | 5 405 | 2,9 |
| 2,5 | 25 | 94,8 | 1 960 | 5 485 | 2,8 |
| 2,5 | 50 | 92,1 | 1 790 | 5 650 | 3,2 |
| 5 | 25 | 96,3 | 1 750 | 5 040 | 2,9 |
| 5 | 50 | 94,8 | 1 710 | 5 320 | 3,1 |
| 10 | 25 | 95,6 | 1 800 | 5 460 | 3,0 |
| 10 | 50 | 97,3 | 1 880 | 5 190 | 2,8 |

On n'a pas observé la formation de gel.

### Exemple 2 :

Cet exemple illustre la polymérisation en continu de l'acide acrylique dans un réacteur tubulaire de longueur L=20 m et de diamètre intérieur D=5 mm équipé d'un système pouvant osciller à une fréquence de 0 à 10 Hz avec une amplitude comprise entre 0 et 5 cm. Les oscillations sont transmises mécaniquement au fluide présent à l'intérieur dudit réacteur à l'aide d'un piston coulissant étanche. On utilise ici un réacteur Ni-Tech®.

La recette est similaire à celle utilisée dans l'exemple 1. L'extrait sec final en poly(acide acrylique) est d'environ 35 %.

Les débits d'introduction des réactifs dans le mélangeur statique et donc dans le réacteur situé en aval sont réglés de telle sorte que les masses introduites soient proportionnelles aux valeurs mentionnées dans le tableau 1, exemple 1.

Le temps de séjour dans le réacteur est fixé à environ deux minutes et le débit des trois pompes est alors fixé afin que le débit global soit proche de 80 Kg par heure.

Dans ces conditions opératoires, l'amplitude et la fréquence des oscillations sont modifiées. Dans tous les cas de figures, une exothermie ainsi qu'une élévation de pression sont observées au sein du réacteur. La température maximale observée était de 150°C et la pression maximale était de 10 bars.

### Caractérisation des polymères obtenus :

**Tableau 3**

| Fréquence (Hz) | Amplitude (mm) | Conversion (%) | Mn (g/mol) | Mw (g/mol) | IP |
|---|---|---|---|---|---|
| 1,25 | 25 | 93,1 | 2 050 | 6 200 | 3,0 |
| 1,875 | 25 | 91,2 | 1 950 | 6 450 | 3,3 |
| 2,5 | 25 | 93,2 | 1 840 | 5 930 | 3,2 |
| 5 | 25 | 95,3 | 1 910 | 6 030 | 3,2 |
| 10 | 25 | 90,7 | 2 020 | 6 740 | 3,3 |

On n'a pas observé la formation de gel.

### Exemple 3 :

Cet exemple illustre la polymérisation en continu de l'acide acrylique dans un réacteur tubulaire de longueur L=20 m et de diamètre intérieur D=15 mm équipé d'un système pouvant osciller à une fréquence de 0 à 10Hz avec une amplitude comprise entre 0 et 5 cm. Les oscillations sont transmises mécaniquement au fluide présent à l'intérieur dudit réacteur à l'aide d'un piston coulissant étanche. On utilise ici un réacteur Ni-Tech®.

L'acide acrylique est polymérisé en présence d'un système d'amorçage composé de persulfate de sodium, couplé à des sels métalliques ainsi qu'à de l'hypophosphite de sodium. Ce dernier joue à la fois le rôle d'agent réducteur et d'agent de transfert. L'extrait sec final en poly(acide acrylique) est d'environ 35 %.

Les réactifs sont séparés dans trois cuves préparantes distinctes et sont mélangés juste avant leur introduction dans le réacteur tubulaire afin de s'assurer que la polymérisation ne débute qu'à l'intérieur dudit réacteur. Les réactifs issus des trois cuves sont mélangés à l'aide d'un mélangeur statique (de type SMX) à l'aide de trois pompes distinctes.

Les débits d'introduction des réactifs dans le mélangeur statique et donc dans le réacteur situé en aval sont réglés de telle sorte à ce que les masses introduites soient proportionnelles aux valeurs mentionnées dans le tableau ci-après :

**Tableau 4**

| **Cuve 1** | **Cuve 2, thermostatée à 80°C** | | | **Cuve 3** | |
|---|---|---|---|---|---|
| AA 100 % (Kg) | Sulfate de fer (Kg) | Hypophosphite de sodium (Kg) | Eau déminéralisée (Kg) | Persulfate de sodium (Kg) | Eau déminéralisée (Kg) |
| 35 | 0,01 | 6,0 | 45 | 4 | 10 |

Les débits des trois pompes reliées aux trois cuves préparantes sont ensuite proportionnellement modifiés afin d'ajuster le temps de séjour dans le réacteur tubulaire. Ledit temps de séjour est mesuré visuellement par ajout d'un traceur coloré ou à l'aide d'un conductimètre et d'une solution saline.

Le polymère fabriqué par ce biais peut être collecté afin d'en évaluer les caractéristiques physico-chimiques. Le produit prélevé est une solution polymérique aqueuse peu visqueuse.

Outre le débit global (résultant de la somme des débits des trois pompes), la fréquence ainsi que l'amplitude imprimées par l'oscillateur peuvent être modifiées. Dès que l'un de ces paramètres est modifié, il est nécessaire d'attendre un temps au moins égal à cinq fois le temps de séjour dans le réacteur avant de collecter un échantillon en sortie du réacteur ou sur un point de collecte intermédiaire (et ce afin d'atteindre le régime stationnaire caractéristique d'un procédé continu).

Dans tous les cas de figures, une exothermie ainsi qu'une élévation de pression sont observées au sein du réacteur. La température maximale observée était de 155°C et la pression maximale était d'environ 11 bars.

Pour la recette telle que décrite ci-avant, un temps de séjour dans le réacteur d'environ trois minutes permet d'obtenir un degré de conversion très bon. Le débit des trois pompes est alors fixé afin que le débit global soit proche de 60 Kg par heure.

Dans ces conditions opératoires, l'amplitude et la fréquence des oscillations sont modifiées.

### Caractérisation des polymères obtenus :

**Tableau 5**

| Fréquence (Hz) | Amplitude (mm) | Conversion (%) | Mn (g/mol) | Mw (g/mol) | IP |
|---|---|---|---|---|---|
| 0,625 | 50 | 99,1 | 1 540 | 4 565 | 3,0 |
| 1,25 | 25 | 99,99 | 1 535 | 6 040 | 3,9 |
| 1,25 | 50 | 99,99 | 1 445 | 5 785 | 4,0 |
| 2,5 | 25 | 99,6 | 2 210 | 8 960 | 4,1 |
| 2,5 | 50 | 99,99 | 1 750 | 6 780 | 3,9 |
| 5 | 25 | 98,9 | 1 830 | 6 540 | 3,6 |
| 5 | 50 | 99,7 | 2 150 | 7 300 | 3,4 |
| 10 | 5 | 99,99 | 2 130 | 7 650 | 3,6 |
| 10 | 25 | 99,99 | 1 970 | 6 600 | 3,4 |
| 10 | 50 | 97,6 | 1 630 | 5 830 | 3,6 |

On n'a pas observé la formation de gel.

## Revendications

1. Procédé de préparation en continu d'un polymère anionique, d'extrait sec (ES) compris entre 20 % et 60 % en poids, par rapport au poids total de la formule, de poids moléculaire en poids Mw inférieur à 10 000 g/mol, mesurée par chromatographie d'exclusion stérique GPC tel que décrite dans la description, par polymérisation radicalaire, comprenant les étapes suivantes :
a) On dispose d'au moins un monomère choisi parmi l'acide acrylique, l'acide méthacrylique et leurs mélanges, ledit monomère pouvant être partiellement neutralisé,
b) on dispose d'eau, éventuellement chaude,
c) on dispose d'au moins un initiateur,
d) on dispose éventuellement d'au moins un agent de transfert de chaîne,
e) on introduit les composants des étapes a), b), c) et d) dans un réacteur tubulaire d'une longueur L_{R} d'au moins 5 m et comprenant au moins une section tubulaire de longueur L_{S} et de diamètre interne D tel que L_{S} est au moins 20 fois plus grande que D, dans lequel chaque section tubulaire comprend sur toute sa longueur une pluralité de chicanes stationnaires, opposées au flux, sous la forme de rondelles d'un diamètre identique au diamètre interne de la section tubulaire, formant ainsi un fluide dans le réacteur tubulaire,
f) on connecte la section tubulaire à un dispositif permettant de soumettre ledit fluide à un mouvement oscillatoire,
g) on conduit une réaction de polymérisation dans ledit réacteur, éventuellement avec un moyen de chauffage permettant d'amorcer la réaction de polymérisation, avec un temps de séjour dans le réacteur supérieur à 1 min, le temps de séjour, la taille des trous dans les chicanes, leur espacement, les mouvements du dispositif sont choisis de sorte à assurer en tout point dans le réacteur une bonne homogénéité du mélange,
h) on obtient en sortie du réacteur ledit polymère anionique en solution dans l'eau.

2. Procédé selon l'une quelconque des revendications précédentes, dans lequel D est inférieur à 20 cm, avantageusement inférieur à 15 cm, plus avantageusement inférieur ou égal à 10 cm.

3. Procédé selon l'une quelconque des revendications précédentes, dans lequel les chicanes sont espacées, de manière régulière ou non, d'une distance allant de 1D à 3D.

4. Procédé selon l'une quelconque des revendications précédentes, dans lequel les chicanes comprennent des trous annulaires concentriques tels que le ratio d2/d1, où d2 est le diamètre externe de la rondelle et d1 le diamètre interne de la rondelle, varie de 1,2 à 5.

5. Procédé selon l'une quelconque des revendications précédentes, dans lequel l'amplitude du mouvement oscillatoire varie de 0,3xd2 à 4xd2, et la fréquence du mouvement oscillatoire varie de 0,1 à 100 Hz.

6. Procédé selon l'une quelconque des revendications précédentes, dans lequel le réacteur comprend un ou plusieurs dispositifs permettant d'apporter ou d'évacuer des calories, permettant un contrôle de la température qui peut être différente d'une zone à l'autre.

7. Procédé selon l'une quelconque des revendications précédentes, dans lequel l'initiateur est introduit en entrée et/ou en aval du réacteur, en une ou plusieurs fois.

8. Procédé selon l'une quelconque des revendications précédentes, dans lequel le monomère est introduit en entrée et/ou en aval du réacteur, en une ou plusieurs fois.

9. Procédé selon l'une quelconque des revendications précédentes, dans lequel on introduit également un catalyseur à base de sels métalliques hydrosolubles, en entrée et/ou en aval du réacteur, en une ou plusieurs fois.

10. Procédé selon l'une quelconque des revendications précédentes, dans lequel on dispose en outre, d'un ou plusieurs autre(s) monomère(s) éthyléniquement insaturé(s) choisi(s) dans le groupe consistant en l'acide 2-acrylamido-2-méthylpropane sulfonique (AMPS), l'acide maléique, l'acide fumarique, l'acide crotonique, l'acide itaconique, les télomères insaturés de l'acide acrylique, les monomères de formule (I) : 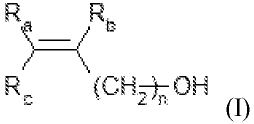 dans laquelle:
- Rₐ, R_{b} et R_{c} représentent, indépendamment les uns des autres, H ou CH₃,
- n est un entier variant entre 0 et 2.

11. Procédé selon l'une quelconque des revendications précédentes, dans lequel le monomère est l'acide acrylique et le polymère obtenu suite à l'étape d) est le poly(acide acrylique) de poids moléculaire Mw compris entre 1 000 et 10 000 g/mol et d'indice de polydispersité compris entre 1,5 et 4.

12. Procédé selon l'une quelconque des revendications précédentes, dans lequel on injecte également dans le réacteur, en une zone où le taux de conversion du monomère est supérieur à 90 %, un agent de neutralisation.

13. Procédé selon l'une quelconque des revendications précédentes, dans lequel le réacteur est relié en sortie à un réacteur tubulaire équipé ou non d'un dispositif oscillatoire tel que défini précédemment, à un réacteur agité et/ou une colonne de distillation flash.

## Patentansprüche

1. Verfahren zur kontinuierlichen Herstellung eines anionischen Polymers, mit 20 bis 60 Gew.-% Trockenextrakt (TE) im Verhältnis zum Gesamtgewicht der Formel, mit einem gewichtsmittleren Molekulargewicht Mw von unter 10.000 g/mol, gemessen mit sterischer Ausschlusschromatographie (SEC) gemäß der Beschreibung, durch radikalische Polymerisation mit folgenden Schritten:
a) man nimmt mindestens ein Monomer, das unter Acrylsäure, Methacrylsäure und deren Mischungen ausgewählt ist, wobei dieses Monomer teilweise neutralisiert werden kann,
b) man nimmt, eventuell heißes, Wasser,
c) man nimmt mindestens einen Initiator,
d) man nimmt eventuell mindestens ein Kettenübertragungsmittel,
e) man führt die Komponenten der Schritte a), b), c) und d) in einen röhrenförmigen Reaktor mit einer Länge L_{R} von mindestens 5 m und mit mindestens einem röhrenförmigen Abschnitt mit einer Länge Ls und einem Innendurchmesser D ein, sodass Ls mindestens 20-mal größer als D ist, wobei jeder röhrenförmige Abschnitt über seine gesamte Länge eine Vielzahl von stationären Leitblechen gegen die Strömung aufweist, die die Form von Lochscheiben mit demselben Durchmesser wie der Innendurchmesser des röhrenförmigen Abschnitts haben und somit ein Fluid im röhrenförmigen Reaktor bilden,
f) man schließt den röhrenförmigen Abschnitt an eine Vorrichtung an, mit der dieses Fluid einer oszillierenden Bewegung ausgesetzt werden kann,
g) man führt eine Polymerisationsreaktion in diesem Reaktor, eventuell mit einer Heizeinrichtung zur Einleitung der Polymerisationsreaktion, mit einer Verweilzeit im Reaktor von mehr als 1 Minute aus, wobei die Verweilzeit, die Größe der Löcher in den Leitblechen, deren Abstand und die Bewegungen der Vorrichtung so ausgewählt werden, dass eine in allen Punkten gute Homogenität der Mischung im Reaktor erzielt wird,
h) man erhält am Ausgang des Reaktors das genannte anionische Polymer, das in Wasser gelöst ist.

2. Verfahren nach einem beliebigen der vorstehenden Ansprüche, bei dem D kleiner als 20 cm, vorzugsweise kleiner als 15 cm und noch bevorzugter kleiner oder gleich 10 cm ist.

3. Verfahren nach einem beliebigen der vorstehenden Ansprüche, bei dem die Leitbleche in einem bestimmten regelmäßigen oder nicht regelmäßigen Abstand angeordnet sind, wobei dieser Abstand von 1D bis 3D betragen kann.

4. Verfahren nach einem beliebigen der vorstehenden Ansprüche, bei dem die Leitbleche konzentrische ringförmige Löcher aufweisen, sodass das Verhältnis d2/dl, bei dem d2 der Außendurchmesser der Scheibe und d1 der Innendurchmesser der Scheibe ist, zwischen 1,2 und 5 variiert.

5. Verfahren nach einem beliebigen der vorstehenden Ansprüche, bei dem die Amplitude der oszillierenden Bewegung zwischen 0,3xd2 und 4xd2 und die Frequenz der oszillierenden Bewegung zwischen 0,1 und 100 Hz variiert.

6. Verfahren nach einem beliebigen der vorstehenden Ansprüche, bei dem der Reaktor eine oder mehrere Vorrichtungen umfasst, mit denen Wärme eingebracht oder abgeleitet werden kann, wodurch eine Kontrolle der Temperatur möglich ist, die von einem Bereich zum anderen unterschiedlich ausfallen kann.

7. Verfahren nach einem beliebigen der vorstehenden Ansprüche, bei dem der Initiator in einem oder mehreren Zügen am Eingang und/oder hinter dem Reaktor eingeführt wird.

8. Verfahren nach einem beliebigen der vorstehenden Ansprüche, bei dem das Monomer in einem oder mehreren Zügen am Eingang und/oder hinter dem Reaktor eingeführt wird.

9. Verfahren nach einem beliebigen der vorstehenden Ansprüche, bei dem ebenfalls ein Katalysator aus wasserlöslichen Metallsalzen in einem oder mehreren Zügen am Eingang und/oder hinter dem Reaktor eingeführt wird.

10. Verfahren nach einem beliebigen der vorstehenden Ansprüche, bei dem man unter anderem über eines oder mehrere andere ethylenisch ungesättigte Monomere verfügt, ausgewählt aus der Gruppe bestehend aus 2-Acrylamido-2-methylpropansulfonsäure (AMPS), Maleinsäure, Fumarsäure, Crotonsäure, Itaconsäure, ungesättigten Telomeren von Acrylsäure, Monomeren mit der Formel (I): 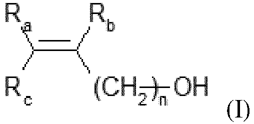 wobei:
- Rₐ, R_{b} und R_{c} unabhängig voneinander H oder CH₃ darstellen,
- n eine ganze Zahl zwischen 0 und 2 ist.

11. Verfahren nach einem beliebigen der vorstehenden Ansprüche, bei dem das Monomer eine Acrylsäure ist und das nach Schritt d) erhaltene Polymer eine Poly(acrylsäure) mit einem Molekulargewicht Mw zwischen 1.000 und 10.000 g/mol und einem Polydispersitätsindex zwischen 1,5 und 4 ist.

12. Verfahren nach einem beliebigen der vorstehenden Ansprüche, bei dem ebenfalls ein Neutralisierungsmittel in den Reaktor eingespritzt wird, und zwar in einem Bereich, in dem der Umwandlungsgrad des Monomers bei über 90 % liegt.

13. Verfahren nach einem beliebigen der vorstehenden Ansprüche, bei dem der Reaktor am Ausgang mit einem röhrenförmigen Reaktor mit oder ohne oszillierende Vorrichtung nach oben genannter Beschreibung mit einem Rührreaktor und/oder mit einer Flash-Destillationssäule verbunden ist.

## Claims

1. Method for the continuous preparation of an anionic polymer, having a solids content (SC) of between 20% and 60% by weight, relative to the total weight of the formula, of molecular weight Mw of less than 10,000 g/mol, measured by Steric Exclusion Chromatography (SEC) as described in the description, by radical polymerization, comprising the following steps:
a) at least one monomer chosen from acrylic acid, methacrylic acid and mixtures thereof is provided, said monomer could be partially neutralized,
b) water, optionally hot water, is provided,
c) at least one initiator is provided,
d) at least one chain-transfer agent is optionally provided,
e) the components of steps a), b), c) and d) are introduced into a tubular reactor having a length L_{R} of at least 5 m and comprising at least one tubular section of length Ls and of internal diameter D such that L_{S} is at least 20 times greater than D, in which each tubular section comprises, over its entire length, a plurality of stationary baffles, opposed to the stream, in the form of washers having a diameter identical to the internal diameter of the tubular section, thus forming a fluid in the tubular reactor,
f) the tubular section is connected to a device enabling to submit said fluid to an oscillatory movement,
g) a polymerization reaction is carried out in said reactor, optionally with a heating mean enabling to initiate the polymerization reaction, with a residence time in the reactor of greater than 1 min, the residence time, the size of the holes in the baffles, their spacing, and the movements of the device being chosen so as to provide, at any point in the reactor, good homogeneity of the mixture,
h) said anionic polymer in solution in water is obtained at the outlet of the reactor.

2. Method according to any preceding claims, wherein D is less than 20 cm, advantageously less than 15 cm, more advantageously less than or equal to 10 cm.

3. Method according to any preceding claims, wherein the baffles are spaced out, regularly or irregularly, by a distance ranging from 1D to 3D.

4. Method according to any preceding claims, wherein the baffles comprise concentric annular holes such that the d2/d1 ratio, wherein d2 is the external diameter of the washer and d1 the internal diameter of the washer, varies from 1.2 to 5.

5. Method according to any preceding claims, wherein the amplitude of the oscillatory movement varies from 0.3xd2 to 4xd2, and the frequency of the oscillatory movement varies from 0.1 to 100 Hz.

6. Method according to any preceding claims, wherein the reactor comprises one or more devices enabling to provide or to discharge calories, allowing control of the temperature which can be different from one area to the other.

7. Method according to any preceding claims, wherein the initiator is introduced at the inlet and/or downstream of the reactor, one or more times.

8. Method according to any preceding claims, wherein the monomer is introduced at the inlet and/or downstream of the reactor, one or more times.

9. Method according to any preceding claims, wherein a catalyst based on water-soluble metal salts is also introduced, at the inlet and/or downstream of the reactor, one or more times.

10. Method according to any preceding claims, wherein one or more further ethylenically unsaturated monomer(s) chosen from the group consisting of 2-acrylamido-2-methylpropane sulfonic acid (AMPS), maleic acid, fumaric acid, crotonic acid, itaconic acid, unsaturated acrylic acid telomers, the monomers of formula (I): 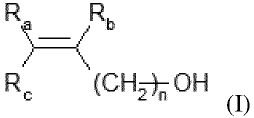 wherein:
- Rₐ, R_{b} and R_{c} represent, independently of one another, H or CH₃,
- n is an integer varying between 0 and 2,
are also provided.

11. Method according to any preceding claims, wherein the monomer is acrylic acid and the polymer obtained following step d) is poly(acrylic acid) of molecular weight Mw of between 1,000 and 10,000 g/mol and a polydispersity index of between 1.5 and 4.

12. Method according to any preceding claims, wherein a neutralizing agent is also injected into the reactor, in an area where the rate of conversion of the monomer is greater than 90%.

13. Method according to any preceding claims, wherein the reactor is connected, at the outlet, to a tubular reactor optionally equipped with an oscillatory device as defined previously, to a stirred reactor and/or a flash distillation column.
